# EUROPÄISCHE PATENTSCHRIFT

(11) **EP 2 359 025 B1**
(45) Veröffentlichungstag und Bekanntmachung des Hinweises auf die Patenterteilung: **24.04.2013**
(21) Anmeldenummer: 09783267.9
(22) Anmeldetag: 22.09.2009
(51) Int. Cl.: F16F 13/10

(54) **HYDROLAGER**
HYDRO-BEARING
PALIER HYDRAULIQUE

(30) Priorität: 20.10.2008 DE 102008037471
(43) Veröffentlichungstag der Anmeldung: 24.08.2011
(73) Patentinhaber: ContiTech Vibration Control GmbH, 30165 Hannover (DE)
(72) Erfinder: REINKE, Florian, 30449 Hannover (DE); SCHNEIDER, Diethard, 29336 Nienhagen (DE); KLETTKE, Michael, 30171 Hannover (DE)
(74) Vertreter: Finger, Karsten
(86) Internationale Anmeldenummer: PCT/EP2009/062241
(87) Internationale Veröffentlichungsnummer: WO 2010/046191

(56) Entgegenhaltungen:
- DE-A1-102007 014 242
- US-A1- 2005 151 309

## Beschreibung

Die Erfindung betrifft ein Hydrolager, das folgende Bestandteile enthält:
- ein Gehäuse und eine Ausgleichsmembran, die ein Hydraulikvolumen umschließen,
- eine Trennwand, die das Hydraulikvolumen in eine Arbeits- und in eine Ausgleichskammer unterteilt,
- wobei die Trennwand einen Überströmkanal enthält, über den die beiden Kammern miteinander verbunden sind, und
- wobei die Trennwand eine Öffnung aufweist, in der eine zwischen zwei Bauteilen eingespannte Membran aus flexiblem, elastomerem Material liegt.

Ein derartiges Lager ist beispielsweise aus der DE 10 2004 001 322 A1 bekannt und wird beispielsweise in Kraftfahrzeugen zwischen dem Fahrzeugmotor und dem Chassis eingebaut. Durch das Hydrolager sollen Schwingungen, die von dem Motor auf das Chassis bzw. in umgekehrter Richtung übertragen werden, unterdrückt oder zumindest gedämpft werden. Mit Hilfe des Hydrolagers soll ferner verhindert werden, dass akustische Schwingungen in Form von Körperschall vom Motor auf das Chassis des Fahrzeuges gelangen können. Dazu weist die zwischen Arbeitskammer und Ausgleichskammer befindliche Trennwand neben dem Überströmkanal eine weitere Öffnung auf, in der eine zwischen zwei Bauteilen eingespannte Membran aus flexiblem, elastomerem Material liegt. Üblicherweise ist die Membran zwischen zwei Wegbegrenzungselementen eingespannt, die die Auslenkung der Membran in axiale Richtung des Lagers begrenzen.

Aus der DE 10 2004 001 322 A1 ist es bekannt, die zwischen den beiden Bauteilen eingespannte Membran radial vorzuspannen. Dies hat den Vorteil, dass mit der Membran besonders gut bestimmte störende Frequenzen in dem Körperschallspektrum reduziert werden können. Die Membran weist einen Randwulst mit einer Verstärkungseinlage auf, so dass sich nach der Vulkanisation der Membran das elastomere Material im Zentrum der Membran stärker zusammenzieht als in dem Randbereich der Membran, wodurch die radiale Vorspannung entsteht. Es hat sich gezeigt, dass die aus der DE 10 2004 001 322 A1 bekannte Membran besonders gut funktioniert. Es ist jedoch festzustellen, dass die Verstärkungseinlage als zusätzliches Element in die Membran eingebracht werden muss, was zusätzlichen Aufwand und zusätzliche Kosten verursacht. Darüber hinaus könnte die Membran bei alten Hydrolagern im Übergangsbereich zum Randwulst einreißen, da das elastomere Material der Membran dort eine besonders hohe Vorspannung aufweist.

Der Erfindung liegt die Aufgabe zugrunde, ein Hydrolager mit einem einfachen Aufbau zu schaffen, das eine sehr hohe Lebensdauer aufweist.

Die Aufgabe wird gemäß den kennzeichnenden Merkmalen des Anspruchs 1 dadurch gelöst, dass die Membran derart zwischen den beiden Bauteilen eingespannt ist, dass sich in Folge der Einspannung eine radiale Vorspannung der Membran ergibt.

Der mit der Erfindung erzielte Vorteil ist insbesondere darin zu sehen, dass das Hydrolager einen einfachen Aufbau aufweist. Insbesondere kann die Membran ausschließlich aus flexiblem, elastomerem Material bestehen. Das Einbringen von zusätzlichen Elementen in die Membran, z.B. das Einbringen einer Verstärkungseinlage, ist nicht notwendig. Somit ist eine einfache und preiswerte Herstellung der Membran möglich. Ein weiterer Vorteil der Erfindung ist darin zu sehen, dass das Hydrolager eine hohe Lebensdauer aufweist, da die Membran über ihre gesamte Fläche gleichmäßig vorgespannt wird. Ein weiterer Vorteil der Erfindung ist schließlich darin zu sehen, dass die Membran auf einfache Art und Weise in beliebiger Form gefertigt werden kann (z.B. rund, rechteckig oder oval).

Gemäß einer Weiterbildung der Erfindung nach Anspruch 2 ist die Membran zwischen zwei Bauteilen in Form von Gitterplatten eingespannt, die die Auslenkung der Membran begrenzen. Der Vorteil dieser Weiterbildung ist darin zu sehen, dass die Membran zwischen zwei Bauteilen eingegrenzt wird, die ohnehin im Hydrolager vorhandenen sind. Gemäß einer Weiterbildung der Erfindung nach Anspruch 3 hat die Membran einen umlaufenden Wulst, der über mindestens eine Oberfläche der Membran hinausragt, wobei das dieser Oberfläche zugewandte Bauteil über eine umlaufende schiefe Ebene verfügt, deren höchster Punkt radial **außen** liegt und über die der umlaufende Wulst gespannt ist. Der Vorteil dieser Weiterbildung ist darin zu sehen, dass die Erzeugung einer radialen Vorspannung in der Membran mit Hilfe eines Wulstes, der über eine schiefe Ebene gespannt wird, einfach möglich ist.

Gemäß einer Weiterbildung der Erfindung nach Anspruch 4 hat die Membran einen umlaufenden Wulst, der über beide Oberflächen der Membran hinausragt, wobei die den Oberflächen zugewandten Bauteile jeweils über eine umlaufende schiefe Ebene verzügen, deren höchster Punkt radial **außen** liegt, und über die der umlaufende Wulst gespannt ist. Der Vorteil dieser Weiterbildung ist darin zu sehen, dass es während der Herstellung des Hydrolagers keine Rolle spielt, in welcher Orientierung die Membran zwischen den beiden Bauteilen eingelegt und eingespannt wird. Somit kann es nicht zu Produktionsfehlern kommen. Ein weiterer Vorteil dieser Weiterbildung ist darin zu sehen, dass bereits bei einem geringen Verpressweg der beiden Bauteile in axialer Richtung des Hydrolagers in der Membran eine ausreichend große Vorspannung entsteht.

Gemäß einer Weiterbildung der Erfindung nach Anspruch 5 liegt der Winkel der schiefen Ebene zwischen 30° und 60°. Der Vorteil dieser Weiterbildung ist darin zu sehen, dass einerseits nur geringe Kräfte aufgebracht werden müssen, um eine radiale Vorspannung in der Membran zu erzeugen, und andererseits bei einem vorgegebenen Vorspannweg zwischen den beiden Bauteilen eine ausreichend große radiale Vorspannung in der Membran aufgebaut wird.

Gemäß einer Weiterbildung der Erfindung nach Anspruch 6 ist die Membran topfförmig mit einer umlaufenden Wand ausgebildet, die in eine umlaufende Rinne des ersten Bauteils eingeknüpft ist, wobei das erste Bauteil eine von der Rinne umfasste topfförmige Aussparung aufweist, in die das zweite Bauteil mit einem umlaufenden Vorsprung deckelartig eingreift und dadurch die Membran radial vorspannt. Der Vorteil dieser Weiterbildung ist darin zu sehen, dass über die Höhe des Vorsprunges eine definierte radiale Vorspannung der Membran eingestellt werden kann (näheres s. Figurenbeschreibung).

Gemäß einer Weiterbildung der Erfindung nach Anspruch 7 ist die Membran auf ihren Oberflächen mit einem Gleitmittel beschichtet. Der Vorteil dieser Weiterbildung ist darin zu sehen, dass die Reibung zwischen den Oberflächen der Membran und den Oberflächen der Bauteile, zwischen denen die Membran eingespannt ist, herabgesetzt wird, und somit die Verpressung der Membran zwischen den beiden Bauteilen vereinfacht wird.

Gemäß einer Weiterbildung der Erfindung nach Anspruch 8 enthält das elastomere Material der Membran einen Hilfsstoff, der nach der Vulkanisation der Membran an die Oberflächen der Membran tritt und als Gleitmittel wirkt. Der Vorteil dieser Weiterbildung ist darin zu sehen, dass der Hilfsstoff in das elastomere Material der Membran vor der Vulkanisation auf einfache Art und Weise eingemischt werden kann. Ein Bestreichen der Oberflächen der Membran mit einem Gleitmittel nach der Produktion der Membran ist somit nicht notwendig. Als Hilfsstoff wird vorzugsweise Erucasäureamnid verwendet.

Gemäß einer Weiterbildung der Erfindung nach Anspruch 9 liegt in den Hauptausdehnungsrichtungen der Membran das Verhältnis zwischen der Länge der nicht vorgespannten Membran in einer Hauptausdehnungsrichtung und der durch Vorspannung zusätzlich erzeugten Länge zwischen 30:1 und 50:1. Der Vorteil dieser Weiterbildung ist darin zu sehen, dass sich in dem angegebenen Bereich einerseits eine ausreichend große radiale Vorspannung der Membran ergibt, um eine gute Funktion des Hydrolagers sicher zu stellen. Andererseits ist die Membran nicht so stark radial vorgespannt, dass sie aufgrund der radialen Vorspannung im Laufe der Lebensdauer des Hydrolagers beschädigt werden könnte.

Gemäß einer Weiterbildung der Erfindung nach Anspruch 10 ist in den Hauptausdehnungsrichtungen der Membran die Vorspannung prozentual unterschiedlich stark ausgeprägt. Der Vorteil dieser Weiterbildung ist darin zu sehen, dass Körperschallschwingungen über einen besonders breitbandigen Frequenzbereich gedämpft werden können.

Ein Ausführungsbeispiel und weitere Vorteile der Erfindung werden im Zusammenhang mit den nachstehenden Figuren erläutert, darin zeigt:
- Fig. 1: ein Hydrolager in systematischer Darstellung,
- Fig. 2: einen Ausschnitt aus Fig. 1,
- Fig. 3: ein Wegbegrenzungselement in Form einer Gitterplatte,
- Fig. 4: ein Wegbegrenzungselement in Form einer Gitterplatte,
- Fig. 5: eine Membran,
- Fig. 6: eine zwischen zwei Gitterplatten eingespannte Membran.

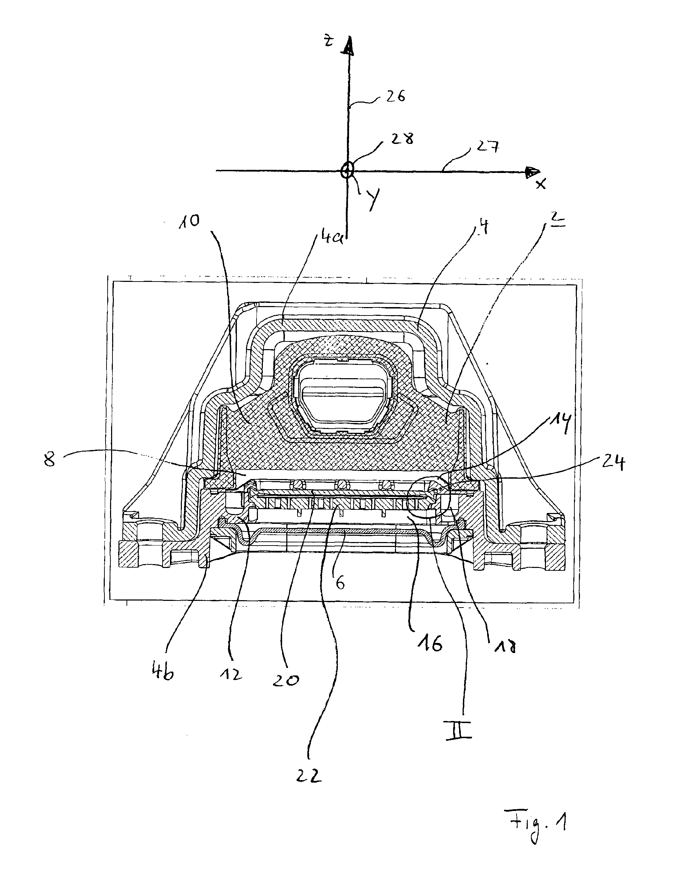

Fig. 1 zeigt ein Hydrolager 2 im Längsschnitt. Das Hydrolager 2 weist ein Gehäuse 4 mit den beiden Gehäuseteilen 4a und 4b auf, in dem sich ein Hydraulikvolumen 8 befindet. Das Hydraulikvolumen 8 wird an einem Ende des Hydrolagers 2 (das im Folgenden als oberes Ende bezeichnet wird) durch eine elastomere Tragfeder 10 und an dem anderen Ende des Hydrolagers 2 (das im Folgenden als unteres Ende bezeichnet wird) durch eine flexible Ausgleichmembran 6 abgeschlossen. Das Hydraulikvolumen 8 ist durch eine sich radial erstreckende Trennwand 12, die Bestandteil des Gehäuseteiles 4b ist, in einer Arbeitskammer 14 und in einer Ausgleichskammer 16 unterteilt. Die beiden Kammern 14, 16 sind über einen Ringkanal 18 in der Trennwand 12 miteinander verbunden.

Die Trennwand 12 weist eine Öffnung auf, in der eine Membran 20 liegt, die in einer radialen Ebene des Hydrolagers 2 liegt zwischen zwei Bauteilen in Form einer unteren Gitterplatte 22 und einer oberen Gitterplatte 24 eingespannt ist (in der Figur 1 und in den folgenden Figuren ist ein Koordinatensystem eingezeichnet, in dem die axiale Richtung des Lagers, die im Lager von oben nach unten verläuft, durch die z-Achse 26 eines kartesischen Koordinatensystem bezeichnet ist; die x-Achse 27 und die y-Achse 28 des kartesischen Koordinatensystem spannen eine radiale Ebene des Hydrolagers 2 auf; wenn also von einer radialen Richtung die Rede ist, handelt es sich hierbei um eine Richtung, die in der (radialen) xy-Ebene des Lagers liegt). Die beiden Gitterplatten 22 und 24 sind in an sich bekannter Art und Weise zwischen den beiden Gehäuseteilen 4a und 4b in axialer Richtung des Hydrolagers 2 verpresst, wobei die Presskraft auf die obere Gitterplatte 24 ausgehend von dem Gehäuseteil 4a über die Tragfeder 10 aufgebracht wird. Die Membran 20 ist derartig zwischen den beiden Gitterplatten 22, 24 eingespannt, dass sich in Folge der Verpressung der beiden Gitterplatten 22, 24 in axialer Richtung des Hydrolagers 2 und in Folge der Einspannung der Membran 20 zwischen den beiden Gitterplatten 22, 24 eine Vorspannung der Membran in radialer Richtung ergibt (die Vorspannung der Membran in radialer Richtung des Hydrolagers wird im Folgenden als radiale Vorspannung bezeichnet). Im Zusammenhang mit den nachstehenden Figuren wird im Folgenden erläutert, wie eine radiale Vorspannung in der Membran erzeugt wird.

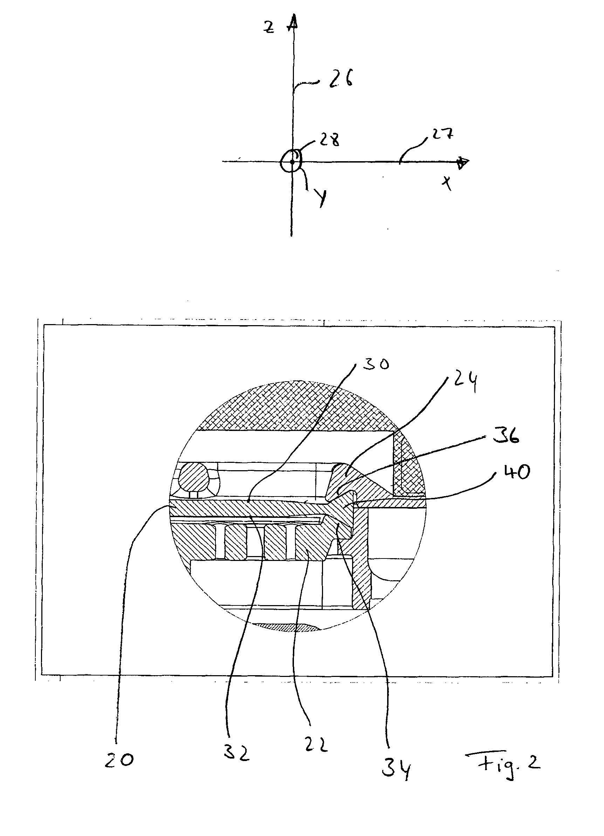

Fig. 2 zeigt den in der Figur 1 mit II bezeichneten Ausschnitt in Vergrößerung. Die Membran 20 hat einen umlaufenden Wulst 40, der in axialer Richtung der Membran einerseits über die obere Oberfläche 30 der Membran 20 und andererseits über die untere Oberfläche 32 der Membran hinausragt. Die Form des umlaufenden Wulstes 40 kann an sich beliebig ausgebildet sein. Im gezeigten Ausführungsbeispiel ist der Wulst 40 derartig ausgebildet, dass die Dicke der Membran 20 im Wulstbereich von radial innen nach radial außen ansteigt. Somit hat sowohl der obere Teil des Wulstes 40 als auch der untere Teil des Wulstes 40 die Form einer schiefen Ebene, die ihren höchsten Punkt jeweils radial außen hat. Die Membran 20 wird mit dem Wulst 40 zwischen den beiden Gitterplatten 22 und 24 eingespannt. An ihrem radial äußeren Rand verfügt sowohl die untere Gitterplatte 22 als auch die obere Gitterplatte 24 jeweils über eine umlaufende schiefe Ebene 34 bzw. 36. Die Membran 20 wird derart zwischen den beiden Gitterplatten 22, 24 eingelegt, dass der umlaufende Wulst 40 einerseits an der schiefen Ebene 36 und andererseits an der schiefen Ebene 34 anliegt. Durch eine Verpressung der beiden Gitterplatten 22, 24 in axialer Richtung wird der umlaufende Wulst 40 der Membran 20 gezwungen, in radialer Richtung nach radial außen auszuweichen. Dies führt zu einer radialen Vorspannung der Membran 20 in Folge des Einspannens der Membran 20 zwischen den beiden Gitterplatten 22, 24. Das Maß der radialen Vorspannung der Membran 20 lässt sich hierbei über die Strecke einstellen, über die die beiden Gitterplatten 22, 24 in axialer Richtung verpresst werden. Hierbei sind die Gitterplatten 22, 24 und die Dicke der Membran 20 in an sich bekannter Art und Weise derart dimensioniert, dass die Membran 20 auch im eingespannten Zustand zwischen den beiden Gitterplatten 22, 24 über einen bestimmten Weg schwingen kann und erst bei Überschreitung dieses Weges durch die beiden Gitterplatten 22, 24 in ihren Schwingungen begrenzt wird.

Die beiden Oberflächen 30, 32 der Membran und damit auch die gesamte Oberfläche des Wulstes 40 können mit einem Gleitmittel beschichtet sein, damit der Wulst 40 bei der axialen Verpressung der Gitterplatten 22, 24 einfacher über die schiefen Ebenen 34, 36 gleiten kann. Vorzugsweise erfolgt die Beschichtung der Oberflächen 30, 32 mit dem Gleitmittel derart, dass bereits während der Herstellung der Membran dem elastomeren Material der Membran 20 ein Hilfsstoff beigefügt wird, der nach Vulkanisation der Membran 20 an die Oberflächen 30, 32 tritt.

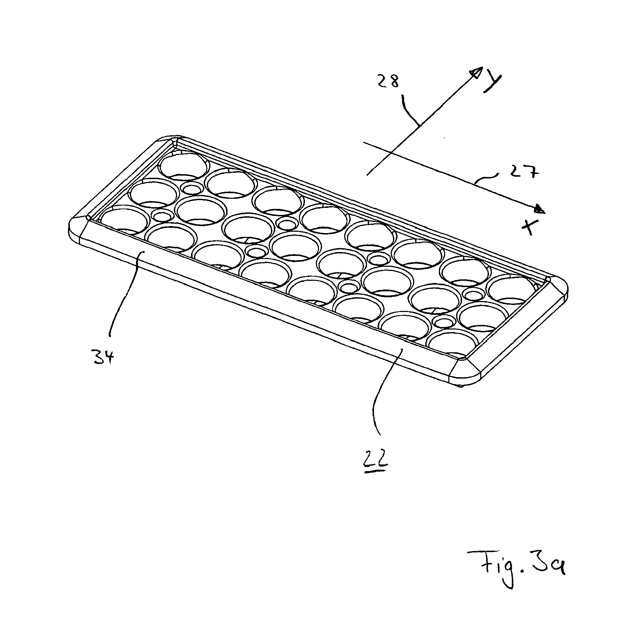

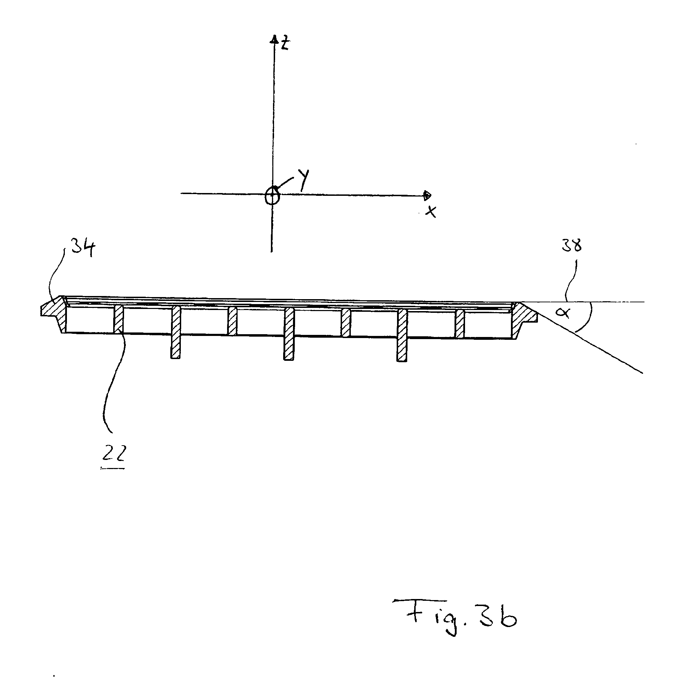

Fig. 3 zeigt die untere Gitterplatte 22, wobei die Figur 3a eine perspektivische Darstellung und die Fig. 3b einen Längsschnitt der Gitterplatte 22 zeigt. Die umlaufende schiefe Ebene 34 schließt mit der Geraden 38, die in radialer Richtung des Hydrolagers verläuft, einen Winkel α ein, der zwischen 30° und 60° liegt.

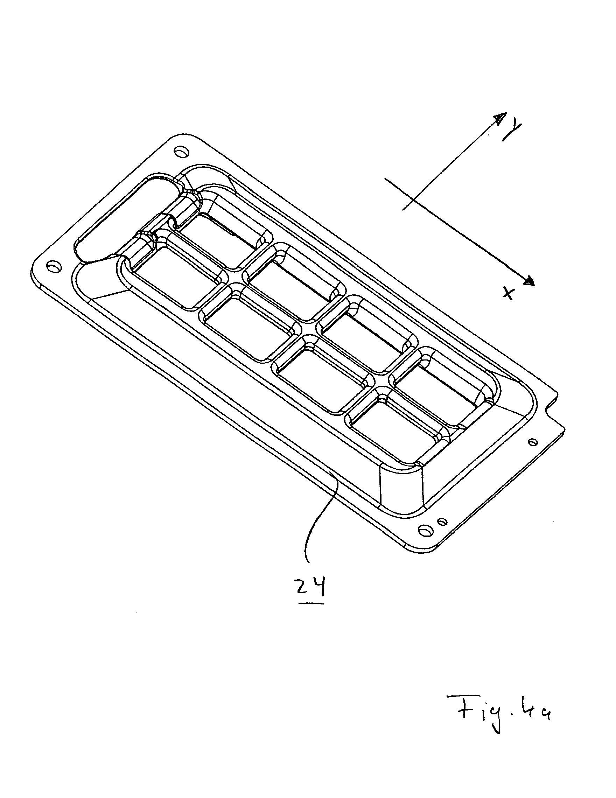

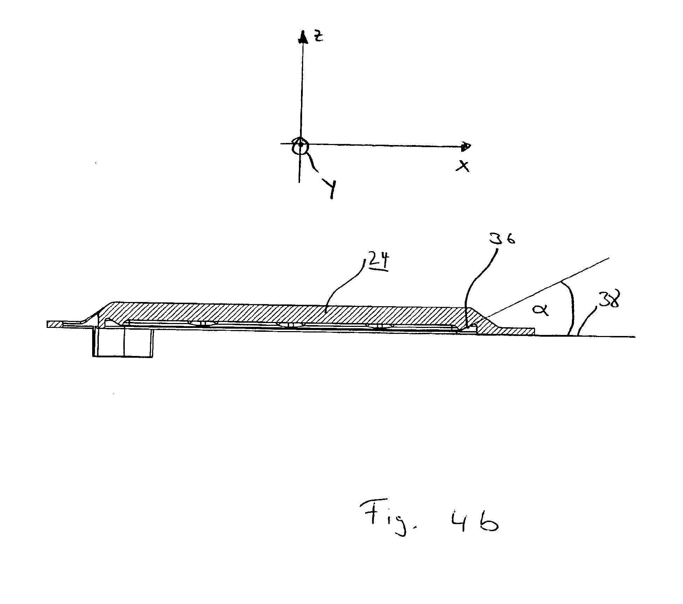

Fig. 4 zeigt die obere Gitterplatte 24, wobei die Fig. 4a eine perspektivische Darstellung und die Fig. 4b einen Längsschnitt der Gitterplatte 24 zeigt. Die umlaufende schiefe Ebene 36 schließt mit der Geraden 38, die in radialer Richtung des Hydrolagers zeigt, einen Winkel α ein, der zwischen 30° und 60° liegt.

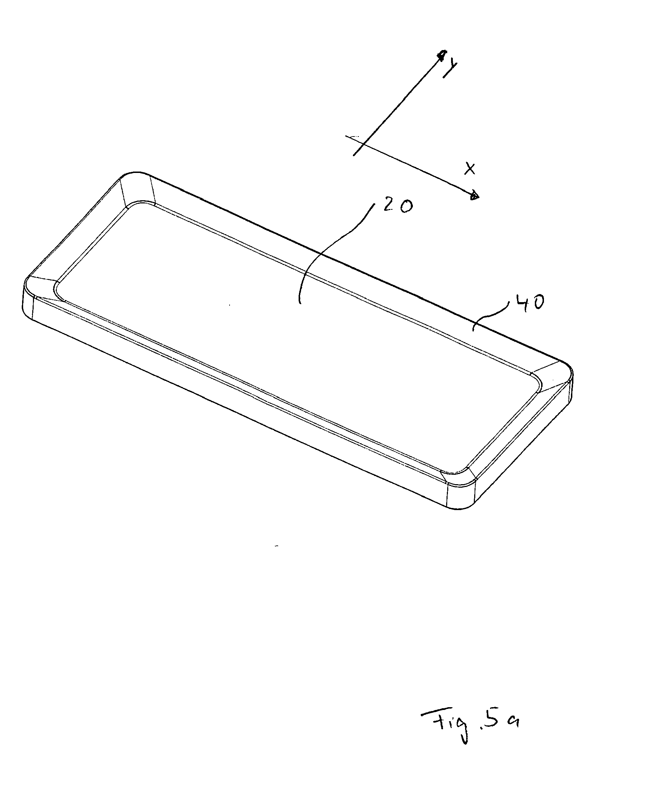

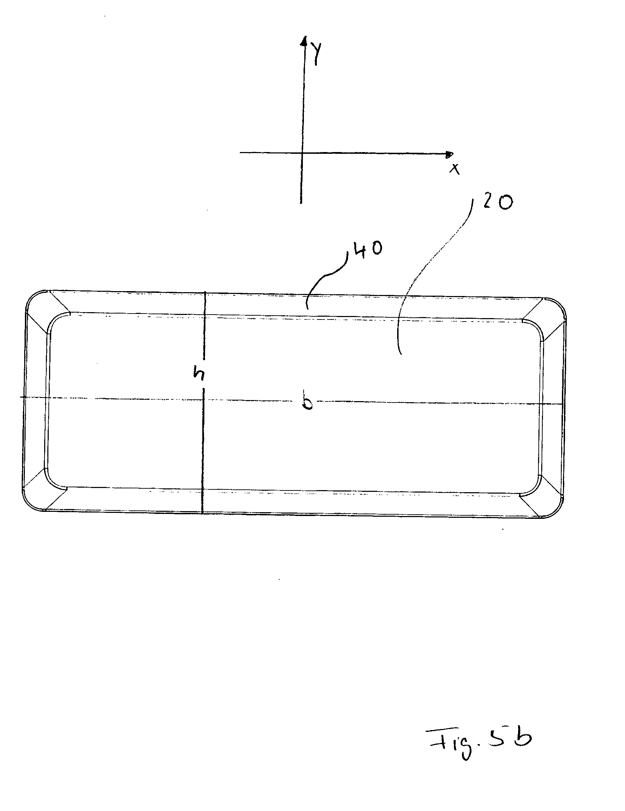

Fig. 5 zeigt die Membran 20, wobei die Fig. 5a eine perspektivische Ansicht der Membran und die Fig. 5b eine Draufsicht auf die Membran 20 zeigt. Der umlaufende Wulst 40 liegt, wie in der Fig. 2 gezeigt, auf der umlaufenden schiefen Ebene 36 der oberen Gitterplatte 22 bzw. auf der unteren schiefen Ebene 34 der unteren Gitterplatte 22 auf. Die Membran 20 weist eine annähernd rechteckige Form mit abgerundeten Ecken auf Die beiden Hauptausdehnungsrichtungen der Membran sind die Breite B und die Höhe H. Durch die Verpressung der Membran 20 zwischen den Gitterplatten 22, 24 (siehe Figuren 1 und 2) wird die Membran derartig radial vorgespannt, dass das Verhältnis zwischen der Länge der nichtvorgespannten Membran 20 in einer Hauptausdehnungsrichtung und der durch Vorspannung zusätzlich erzeugten Länge zwischen 30:1 und 50:1 liegt.

### Beispiel:

| | |
|---|---|
| Breite B der nicht vorgespannten Membran: | 90 mm |
| Durch die Vorspannung zusätzlich erzeugte Breite δB: | 2 mm |
| Verhältnis B/δB: | 45:1 |
| Höhe H der nicht vorgespannten Membran: | 60 mm |
| Durch die Vorspannung zusätzlich erzeugte Höhe δH: | 2 mm |
| Verhältnis H/δH: | 30:1 |

In der Hauptausdehnungsrichtung "Breite" beträgt die prozentuale Vorspannung also ca. 2,2%, wohingegen die radiale Vorspannung der Membran 20 in der Hauptausdehnungsrichtung "Höhe" ca. 3,3% beträgt. Damit ist die radiale Vorspannung bei der gezeigten rechteckigen Membran 20 in den Hauptausdehnungsrichtungen prozentual unterschiedlich stark ausgeprägt.

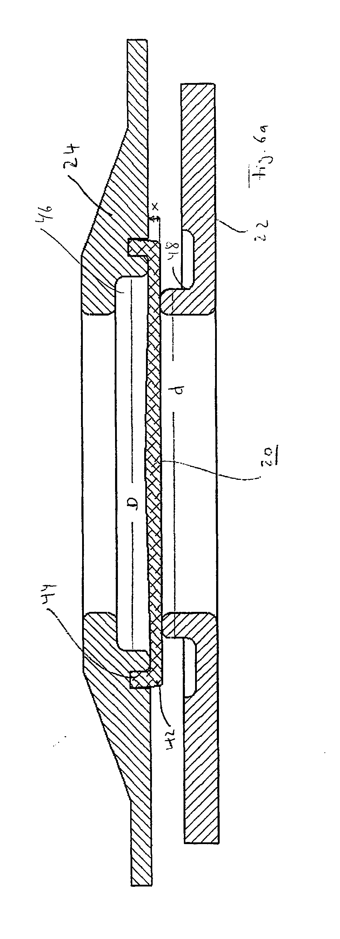

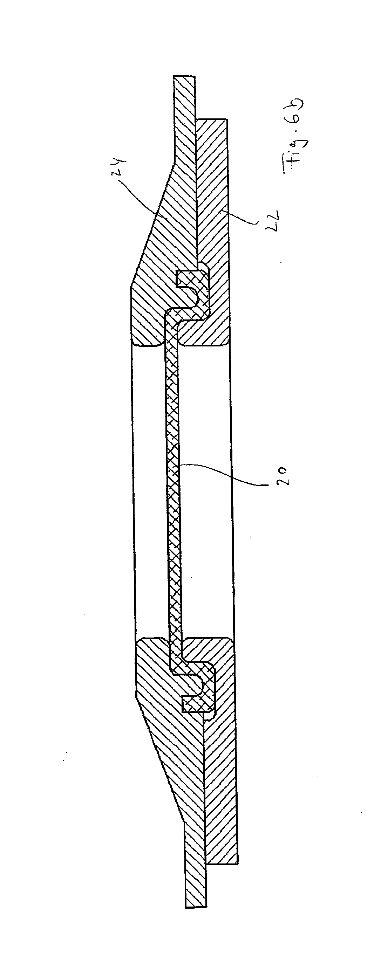

Fig. 6 zeigt ein alternatives Ausführungsbeispiel für die Gitterplatten 22, 24 und für die Membran 20. Fig. 6a zeigt die beiden Gitterplatten 22, 24 und die dazwischen liegende Membran 20 vor der Einspannung der Membran 20. Die Membran 20 ist topfförmig mit einer umlaufenden Wand 42 ausgebildet. Die Wand 42 ist in eine umlaufende Rinne 44 der oberen Gitterplatte 24 eingeknüpft. Die Rinne 44 umfasst eine Aussparung 46 auf, die durch die in radialer Richtung verlaufende Membran 20 abgedeckt ist. Die untere Gitterplatte 22 weist einen umlaufenden Vorsprung 46 auf, dessen Außendurchmesser d in etwa dem Innendurchmesser D abzüglich der zweifachen Dicke X der Membran 20 entspricht; d = D - 2X.

Fig. 6b zeigt die beiden Gitterplatten, 22, 24 im Einbauzustand in das Hydrolager 2 (siehe Fig. 1) mit der dazwischen liegenden Membran 20. Die untere Gitterplatte 22 reift mit dem umlaufenden Vorsprung 48 deckelartig in die topfförmige Aussparung 46 ein. Durch das Einbringen des umlaufenden Vorsprunges 48 in die Aussparung 46 wird die zwischen den Gitterplatten 22, 24 liegende Membran radial vorgespannt. Das Maß der radialen Vorspannung lässt sich hierbei über die Höhe des Vorsprunges 48 einstellen.

### Bezugszeichenliste

### (Teil der Beschreibung)

- 2: Hydrolager
- 4: Gehäuse
- 4a, 4b: Gehäuseteile
- 6: Angleichmembran
- 8: Hydraulikvolumen
- 10: Tragfeder
- 12: Trennwand
- 14: Arbeitskammer
- 16: Ausgleichskammer
- 18: Ringkanal
- 20: Membran
- 22: untere Gitterplatte
- 24: obere Gitterplatte
- 26: z-Achse
- 27: x-Achse
- 28: y-Achse
- 30: obere Oberfläche
- 32: untere Oberfläche
- 34: schiefe Ebene
- 36: schiefe Ebene
- 38: Gerade
- 40: Wulst
- 42: Wand
- 44: Rinne
- 46: Aussparung
- 48: Vorsprung

## Patentansprüche

1. Hydrolager (2), das folgende Bestandteile enthält:
- ein Gehäuse (4) und eine Ausgleichmembran (6), die ein Hydraulikvolumen (8) umschließen,
- eine Trennwand (12), die das Hydraulikvolumen (8) in eine Arbeitskammer (14) und in eine Ausgleichkammer (16) unterteilt,
- wobei die Trennwand (12) einen Überströmkanal (18) enthält, über den die beiden Kammern (14, 16) miteinander verbunden sind, und
- wobei die Trennwand (12) eine Öffnung aufweist, in der eine zwischen zwei Bauteilen (22, 24) eingespannte Membran (20) aus flexiblem, elastomerem Material liegt,
**dadurch gekennzeichnet**, das die Membran (20) derart zwischen den beiden Bauteilen (22, 24) eingespannt ist, das sich infolge der Einspannung eine radiale Vorspannung der Membran (20) ergibt.

2. Hydrolager (2) nach Anspruch 1, **dadurch gekennzeichnet, dass** die Membran (20) zwischen zwei Bauteilen (22, 24) in Form von zwei Gitterplatten (22, 24) eingespannt ist, die die Auslenkung der Membran (20) begrenzen.

3. Hydrolager (2) nach einem der Ansprüche 1 bis 2, **dadurch gekennzeichnet, dass** die Membran (20) einen umlaufenden Wulst (40) hat, der über mindestens eine Oberfläche (30, 32) der Membran (20) hinausragt, und dass das dieser Oberfläche (30, 32) zugewandte Bauteil (22, 24) über eine umlaufende schiefe Ebene (34, 36) verfügt, deren höchster Punkt radial **außen** liegt, und über die der umlaufende Wulst (40) gespannt ist.

4. Hydrolager (2) nach Anspruch 3, **dadurch gekennzeichnet, dass** die Membran (20) einen umlaufenden Wulst (40) hat, der über beide Oberflächen (30, 32) der Membran (20) hinausragt, und dass die den Oberflächen (30, 32) zugewandten Bauteile (22, 24) jeweils über eine umlaufende schiefe Ebene (34, 36) verfügen, deren höchster Punkt radial **außen** liegt, und über die der umlaufende Wulst (40) gespannt ist.

5. Hydrolager (2) nach einem der Ansprüche 3 bis 4, **dadurch gekennzeichnet, dass** der Winkel der schiefen Ebene (32, 34) zwischen 30° und 60° liegt.

6. Hydrolager (2) nach einem der Ansprüche 1 bis 2, **dadurch gekennzeichnet, dass** die Membran (20) topfförmig mit einer umlaufenden Wand (42) ausgebildet ist, die in eine umlaufende Rinne (44) des ersten Bauteils (24) eingeknüpft ist, und dass das erste Bauteil (24) eine von der Rinne (44) umfasste topfförmige Aussparung (46) aufweist, in die das zweite Bauteil (22) mit einem umlaufenden Vorsprung (48) deckelartig eingreift und dadurch die Membran (20) radial vorspannt.

7. Hydrolager (2) nach einem der Ansprüche 1 bis 6, **dadurch gekennzeichnet, dass** die Membran (20) auf ihren Oberflächen (32, 34) mit einem Gleitmittel beschichtet ist.

8. Hydrolager (2) nach Anspruch 7, **dadurch gekennzeichnet, dass** das elastomere Material der Membran (20) einen Hilfsstoff enthält, der nach der Vulkanisation der Membran (20) an die Oberflächen der Membran (20) tritt und als Gleitmittel wirkt.

9. Hydrolager (2) nach einem der Ansprüche 1 bis 8, **dadurch gekennzeichnet, dass** in den Hauptausdehnungsrichtungen der Membran (20) das Verhältnis zwischen der Länge der nicht vorgespannten Membran (20) in einer Hauptausdehnungsrichtung und der durch die Vorspannung zusätzlich erzeugten Länge zwischen 30:1 und 50:1 liegt.

10. Hydrolager (2) nach einem der Ansprüche 1 bis 9, **dadurch gekennzeichnet, dass** in den Hauptausdehnungsrichtungen der Membran (20) die Vorspannung prozentual unterschiedlich stark ausgeprägt ist.

## Claims

1. Hydromount (2) which contains the following components:
- a housing (4) and a compensating diaphragm (6), which enclose a hydraulic volume (8),
- a dividing wall (12), which divides the hydraulic volume (8) into a working chamber (14) and into a compensating chamber (16),
- wherein the dividing wall (12) contains a transfer channel (18), via which the two chambers (14, 16) are connected to one another, and
- wherein the dividing wall (12) has an opening, in which there is a diaphragm (20) of flexible, elastomeric material clamped between two components (22, 24),
**characterized in that** the diaphragm (20) is clamped between the two components (22, 24) in such a way that, as a result of the clamping, a radial pretension is produced in the diaphragm (20).

2. Hydromount (2) according to Claim 1, **characterized in that** the diaphragm (20) is clamped between two components (22, 24) in the form of two grid plates (22, 24), which limit the deflection of the diaphragm (20).

3. Hydromount (2) according to either of Claims 1 and 2, **characterized in that** the diaphragm (20) has an encircling bead (40), which projects beyond at least one surface (30, 32) of the diaphragm (20), and **in that** the component (22, 24) facing this surface (30, 32) has an encircling oblique plane (34, 36), the highest point of which is radially on the outside and by means of which the encircling bead (40) is clamped.

4. Hydromount (2) according to Claim 3, **characterized in that** the diaphragm (20) has an encircling bead (40), which projects beyond both surfaces (30, 32) of the diaphragm (20), and **in that** the components (22, 24) facing the surfaces (30, 32) each have an encircling oblique plane (34, 36), the highest point of which is radially on the outside and by means of which the encircling bead (40) is clamped.

5. Hydromount (2) according to either of Claims 3 and 4, **characterized in that** the angle of the oblique plane (32, 34) is between 30° and 60°.

6. Hydromount (2) according to either of Claims 1 and 2, **characterized in that** the diaphragm (20) is of cup-shaped design with an encircling wall (42) which is slotted into an encircling groove (44) in the first component (24), and **in that** the first component (24) has a cup-shaped recess (46) which is surrounded by the groove (44) and into which the second component (22) engages in the manner of a cover by means of an encircling projection (48) and thereby radially pretensions the diaphragm (20).

7. Hydromount (2) according to one of Claims 1 to 6, **characterized in that** the surfaces (32, 34) of the diaphragm (20) are coated with a lubricant.

8. Hydromount (2) according to Claim 7, **characterized in that** the elastomeric material of the diaphragm (20) contains an additive which migrates to the surfaces of the diaphragm (20) after vulcanization of the diaphragm (20) and acts as a lubricant.

9. Hydromount (2) according to one of Claims 1 to 8, **characterized in that**, in the principal directions of extension of the diaphragm (20), the ratio of the length of the unpretensioned diaphragm (20) in one principal direction of extension to the additional length produced by the pretension is between 30:1 and 50:1.

10. Hydromount (2) according to one of Claims 1 to 9, **characterized in that** the amount of pretension differs in percentage terms in the principal directions of extension of the diaphragm (20).

## Revendications

1. Palier hydraulique (2), contenant les composants suivantes :
- un boîtier (4) et une membrane d'équilibrage (6), lesquels entourent un volume hydraulique (8),
- une paroi de séparation (12) qui divise le volume hydraulique (8) en une chambre de travail (14) et une chambre d'équilibrage (16),
- la paroi de séparation (12) contenant un conduit de trop-plein (18) par le biais duquel les deux chambres (14, 16) sont raccordées l'une à l'autre, et
- la paroi de séparation (12) présentant une ouverture dans laquelle est disposée une membrane (20) en matériau flexible élastomère, tendue entre deux composants (22, 24), **caractérisé en ce que** la membrane (20) est tendue entre les deux composants (22, 24) de telle sorte que du fait de sa tension, il se produise une précontrainte la membrane (20).

2. Palier hydraulique (2) selon la revendication 1, **caractérisé en ce que** la membrane (20) est tendue entre deux composants (22, 24) sous forme de deux plaques en treillis (22, 24), qui limitent la déviation de la membrane (20).

3. Palier hydraulique (2) selon l'une quelconque des revendications 1 à 2, **caractérisé en ce que** la membrane (20) présente un bourrelet périphérique (40) qui fait saillie au-delà d'au moins une surface (30, 32) de la membrane (20) et **en ce que** ce composant (22, 24) tourné vers cette surface (30, 32) dispose d'un plan oblique périphérique (34, 36) dont le point le plus élevé se situe radialement à l'extérieur, et par dessus lequel plan le bourrelet périphérique (40) est tendu.

4. Palier hydraulique (2) selon la revendication 3, **caractérisé en ce que** la membrane (20) présente un bourrelet périphérique (40) qui fait saillie au-delà des deux surfaces (30, 32) de la membrane (20), et **en ce que** les composants (22, 24) tournés vers les surfaces (30, 32) disposent à chaque fois d'un plan oblique périphérique (34, 36) dont le point le plus élevé se situe radialement à l'extérieur, et par dessus lequel plan le bourrelet périphérique (40) est tendu.

5. Palier hydraulique (2) selon l'une quelconque des revendications 3 à 4, **caractérisé en ce que** l'angle du plan oblique (32, 34) est compris entre 30° et 60°.

6. Palier hydraulique (2) selon l'une quelconque des revendications 1 à 2, **caractérisé en ce que** la membrane (20) est réalisée en forme de pot avec une paroi périphérique (42), qui est raccordée dans une gorge périphérique (44) du premier composant (24), et **en ce que** le premier composant (24) présente un évidement (46) en forme de pot entouré par la gorge (44), dans lequel évidement le deuxième composant (22) vient en prise à la manière d'un couvercle avec une saillie périphérique (48) et précontraint ainsi radialement la membrane (20).

7. Palier hydraulique (2) selon l'une quelconque des revendications 1 à 6, **caractérisé en ce que** la membrane (20) est revêtue d'un agent lubrifiant sur ses surfaces (32, 34).

8. Palier hydraulique (2) selon la revendication 7, **caractérisé en ce que** le matériau élastomère de la membrane (20) contient un auxiliaire qui parvient après la vulcanisation de la membrane (20) sur les surfaces de la membrane (20) et qui sert d'agent lubrifiant.

9. Palier hydraulique (2) selon l'une quelconque des revendications 1 à 8, **caractérisé en ce que** dans les directions d'extension principales de la membrane (20) le rapport entre la longueur de la membrane non précontrainte (20) dans une direction d'extension principale et la longueur produite en outre par la précontrainte est compris entre 30:1 et 50:1.

10. Palier hydraulique (2) selon l'une quelconque des revendications 1 à 9, **caractérisé en ce que** la précontrainte est plus ou moins fortement marquée en termes de pourcentages dans les directions d'extension principales de la membrane (20).
